# EUROPEAN PATENT APPLICATION

(11) **EP 1 067 566 A1**
(43) Date of publication of application: **10.01.2001**
(21) Application number: 00114062.3
(22) Date of filing: 06.07.2000
(51) Int. Cl.: H01F 6/06

(54) **Magnetic flux flow resistive magnet**

(30) Priority: 07.07.1999 JP 19264399
(71) Applicant: Tohoku University, Sendai City, Miyagi Prefecture (JP)
(72) Inventor: Watanabe, Kazuo, Nagaoka, Iwanuma-city, Miyagi Pref. (JP); Motokawa, Mitsuhiro, Aoba-ku, Sendai-city, Miyagi Pref. (JP)
(74) Representative: von Hellfeld, Axel, Dr. Dipl.-Phys.

(57) **Abstract**

A novel cryogenic magnet utilizes an extremely small resistive state of a high temperature superconductor. The magnet is comprised of a Y- or Bi-system high temperature superconductor in the form of wires, sheet or film, which is used under a magnetic flux flow resistive state.

## Description

### BACKGROUND OF THE INVENTION

### 1. Field of the Invention

The present invention relates to a cryogenic resistive magnet using a high-temperature superconductor under a magnetic flux flow condition and, more particularly, to a magnet which can be suitably used, e.g., as substitute for a water-cooled magnet in a hybrid magnet system, or as a high magnetic field magnet for nuclear fusion experimental equipment and the like. This type of magnet may be referred to as "semi-superconductive magnet".

### 2. Description of the Related Art

As a high magnetic field generating system, there is known a hybrid magnet system which realizes a stationary high-magnetic field on the order of 30 T, and in which a large-diameter superconducting magnet is combined with a high-electric power water-cooled magnet that is arranged inside of the superconducting magnet. In recent years, efforts have been made to further increase the intensity of the magnetic field up to the order of 40 T. To this end, the electric power for the water-cooled magnet has been increased from the conventional level of 10 MW to a higher level of 20 MW to 30 MW that is comparable with the output of an electric power generating plant of a relatively small scale. To generate such a high magnetic field, the water-cooled magnet is energized by an electric current that is as high as 20 kA to 40 kA. In this instance, as a result of Joule-heat generation due to the resistance of the magnet, there is inevitably caused undesirable dissipation of electric power that is as high as 20 MW to 30 MW. Furthermore, since the water-cooled magnet is subjected to a huge electromagnetic force on the order of 500 MPa, the magnet must be comprised of a material having a high mechanical strength, in addition to a low resistivity characteristic that is required for reducing the high electric power as described above. However, it is quite difficult to develop suitable materials having a high electrical conductivity and a high mechanical strength.

Various attempts are being made in an effort to minimize the resistance and to reduce the required electric power, including immersion of the coil in liquid nitrogen or liquid neon to thereby cool it. For example, the resistance of a high-purity copper can be reduced by one order or to one tenth when cooled in liquid nitrogen at a temperature of 77 K, and by two orders or to one hundredth when cooled in liquid helium at a temperature of 4.2 K. However, while being capable of reducing the required electric power, on one hand, high purity coppers do not provide a sufficient mechanical strength, on the other hand.

In contrast, high strength materials generally include a large amount of impurities in the matrix; hence, the resistance cannot be sufficiently reduced even when the temperature is lowered. This means that high strength material when applied to a so-called cryogenic resistive magnet would not allow a significant saving of the electric power to be achieved.

There is known superconducting magnets capable of generating a high magnetic field substantially without requiring electric power, by utilizing a resistance-free property under the superconducting state of the magnet. The intensity of the magnetic field that can be generated by the superconductive magnet is limited to an upper critical magnetic field thereof, i.e., approximately 22 T in the case of practically used Nb₃Sn superconducting magnet. In the case of a large-diameter superconducting magnet wherein a large electromagnetic force is generated, the intensity of the magnetic field is limited to approximately 15 T due to poor mechanical characteristics of Nb₃Sn. It is for this reason that a high magnetic field exceeding 30 T is generated with the aid of a water-cooled magnet of high electric power, that is positioned inside the superconducting magnet.

On the other hand, Bi- and Y-system high temperature superconductors have been significantly advanced for recent 10 years and used for bulk applications, e.g., as current leads. In particular, with such high temperature superconducting current leads, the inventors for the first time developed a helium-free superconducting magnet that can be cooled by a small-sized refrigerator. However, except applications as such current leads, there has not yet been realized serious success of practical applications for high temperature superconductors.

As for Bi-system high temperature superconductors, a wire making technology known as a silver-sheathing method made it possible to realize an increased length up to the order of km. However, there are still many other problems that should be solved from the viewpoint of strength for applications in a higher magnetic field beyond that for the conventional superconducting wires.

The characteristics of high temperature superconductors, *per se,* have drawn significant attentions as basically physical problems of the magnetic flux condition in the superconductor. In this connection, it has been revealed that the behaviors of the superconductor differ markedly from the magnetic flux condition of the conventional superconductor. As a result, for example, it became difficult to clearly define the upper critical magnetic field of the apparent phase transition found in the previous superconductor and the critical current density closely related thereto. In the case of high temperature superconductors also, it is known that there does basically exist a pin potential bearing the critical current, which is an important aspect from the application viewpoint of the superconductor, though the boundary for practical applications remains undefined.

For high temperature superconductors, it would be appropriate to reassess the conventional criteria for determining the critical current, particularly in view of the problem that the superconductor under a high temperature is physically in a resistive state, instead of a conventional zero-resistance state. When focused only to applications in the region of the zero-resistance state, the effective critical current density of the high temperature superconductor would be extremely small in the high temperature region. It can be thus concluded that fundamental problems still remain in electric power applications using the zero-resistance state of the high temperature superconductor.

### SUMMARY OF THE INVENTION

The present invention has been accomplished by paying primary attention to a very low resistive state of the high temperature superconductor, instead of the zero-resistive state, in search for practical applications of the high temperature superconductor. In other words, the invention provides a cryogenic resistive magnet based on a new concept, whereby the magnet is used under a magnetic flux flow resistive state, instead of the zero-resistance superconducting state.

The principle of the present invention has been elucidated based on the following recognition.

Since a voltage state of the conventional superconductors, i.e., the resistive state corresponding to the magnetic flux state exhibits a very sharp voltage-versus-current characteristic, a mere voltage generation becomes a speedy transition state as a normal conducting propagation. In the superconducting magnet, such a phenomenon is referred to as "quenching" and gives rise to a very rapid change in condition from the superconducting state to the normal conducting state.

On the other hand, it has been recently found that, in the high temperature superconductor, the transition of the flux state is slow and the voltage state is extremely stable, with the result that the high temperature superconductive magnet can be stably and repeatedly energized by a current that is two or more times higher than the value as determined by the conventional criteria for the critical current. Such a unique characteristic has not been found in the conventional superconductors, and is considered to be the contribution of high temperature superconductor having a very low thermal conductivity, in conjunction with the stabilizing effect of the silver that assumes a comparatively large part in the ratio of superconducting core material versus silver sheath.

Accordingly, the inventors' particular attention has been paid to a resistive magnet that utilizes the stabile magnetic flux flow resistive state of the superconductor, instead of the conventional zero-resistance state. This is for the ground that, in the high temperature superconductor, despite the difficulty for realizing an ideal superconducting state of the zero-resistance state, it is possible to stably obtain an extremely small resistive state. The present invention is based on the conception that such a property can be used to develop new magnet capable of generating a high magnetic field with significantly small electric power as compared with the conventional resistive magnet.

According to one aspect of the present invention, there is provided a magnetic flux flow resistive magnet comprising a Bi- or Y-system high temperature superconductor and adapted to be used under a magnetic flux flow resistive state.

The high temperature superconductor in the magnetic flux flow resistive magnet according to the present invention may be in the form of a wire or a tape.

Alternatively, the magnetic flux flow resistive magnet according to the present invention may further comprise a disk of a high-strength sheet material, wherein the high temperature superconductor is a film that is formed on a surface of the disk. In this instance, it is preferred for the film to have a thickness within a range of 10 µm to 60 µm. The high strength sheet material of the disk may be comprised of Hastelloy or other stainless steel, or a suitable alloy of copper and silver or the like

It is preferred that the magnetic flux flow resistive magnet according to the present invention has a working temperature within a range of 4.2 to 30 K. It is further preferred that the working temperature is approximately 20 K.

Advantageously, the high temperature superconductor comprises any one of YBa₂Cu₃O (Y-123), Bi₂Sr₂CaCu₂O_{S} (Bi-2212) and Bi₂Sr₂CaCu₃O₁₀ (Bi-22123).

According to another aspect of the present invention, there is provided a method for manufacturing a magnetic flux flow resistive magnet comprising a Bi- or Y-system high temperature superconductor in the form of a film on a surface of a disk that is comprised of a high-strength sheet material, said magnet forming a Bitter place that is used under a magnetic flux flow resistive state. In the method according to the present invention, the disk of the high-strength sheet material is subjected to rolling to cause a texture such that the high temperature superconductor has an a-b plane that is aligned along the texture during formation of the high temperature superconductor film on the disk. Then, a high magnetic field is applied, during the deposition, to high temperature superconductor film to cause an orientating effect so that the superconductor film has a c-axis that is aligned in a direction normal to the surface of the disk.

In this instance, a buffer layer may be formed on the surface of the disk, prior to formation of the high temperature superconductor film thereon. It is preferred that the buffer layer on the surface of the disk is in the form of a silver lining layer.

### DESCRIPTION OF THE PREFERRED EMBODIMENTS

The present invention provides novel type of low resistive magnet by using a high temperature superconductor under a magnetic flux flow resistive state, as follows:
(A1) Since magnetic flux flow resistive state is close to the region determined by definition of the critical current density, the resistivity in the magnetic flux flow resistive state is approximately 10⁻¹⁰Ωcm. In contrast, high-purity copper has the resistivity of approximately 10⁻⁶Ωcm at room temperature, and the resistivity can be minimized to 10⁻⁷Ωcm by cooling to low temperature of 77 K, or to 10⁻⁸Ωcm by cooling to low temperature of 4.2 K, whereby about one hundredth of resistivity at room temperature can be obtained. Moreover, high-strength material has an electrical conductivity of approximately 80% of that of copper at room temperature, and the resistivity is only approximately 10⁻⁵Ωcm and cannot be reduced to a value below approximately 10⁻⁶Ωcm even by cooling to low temperature of 4.2 K.
   It can be therefore concluded that, under the condition of the magnetic flux flow state of the high temperature superconductor, the resistance at low temperature can be reduced to one hundredth of that of copper and to one thousandth of that of high strength material. Thus, with the high temperature superconductor, despite the difficulty in realizing an ideal zero-resistance superconducting state, it is possible to stably obtain an extremely small resistive state.
(A2) A Bitter-type coil for the water-cooled magnet can be replaced by the magnetic flux flow resistance type coil according to the present invention. Since mechanical strength of the conventional superconductor in the form of wire is approximately 100 MPa to 150 MPa, it is difficult to realize a mechanical strength of not less than 500 MPa with the superconducting wire. However, the above-mentioned object can be achieved by depositing a high temperature superconductor film on a Hastelloy sheet material having a mechanical strength of not less than 500 MPa.
(A3) When practical applications of the high magnetic field at high temperature are considered, the candidate would be only Y-123-system high temperature superconductor. Thus, there are actively progressing projects in Japan and U.S.A., for realizing production of elongated Y-123 tape. Many researchers are working desperately for astounding projects attempting to realize a km-class elongated tape which is orientated like a single crystal, by a complicated vacuum evaporation referred to as IBAD or RABIT.
   For producing the magnet, there are known two methods of increasing the magnetomotive force. The first method is to increase the number of turn up to several thousands of turns or to several tens of thousand of turns with a 100 A class running current, and applied to general superconducting magnets. The second method is to realize a large magnetomotive force by the number of turn of the approximately hundreds with a running current as large as tens of thousands amperes (A), and is applied to water-cooled magnets.

Production of one-piece Bitter plate is far easier than the km-class tape, and the water-cooled magnet can be produced more simply and inexpensively as compared with the prior art, when such a high temperature superconductor Bitter plate is used as the magnetic flux flow resistive magnet.

Hereinafter, specific examples of the invention will be described.
(B1) At High Field Laboratory, Institute For Material Research, Tohoku University, Bitter water-cooled magnet is currently excited with an electric power of 23 kA and 350 V. However, when the magnetic flux flow resistive magnet is used, the magnet design can be designed so as to be excited with a voltage level of approximately 0.25 V at 21 kA. In that voltage level, 0.2 V corresponds to a voltage drop in the bus bars at the midpoint, and the allowance of the flow resistance loss in the coil is 0.05 V.
   Therefore, it is possible to minimize the electric power down to the value of 5.25 kW. In comparison to the electric power of approximately 8 MW of the conventional hybrid magnet of 30 T, the electric power can be saved by approximately 1/1500.
(B2) Unlike a general superconducting magnet, the resistive magnet is featured by the inductance of the coil that is extremely small, i.e., approximately 1/10000 of the inductance of the general superconducting magnet, since the magnetic field is generated with a large current. This means that the magnet can be excited only with the voltage of 1 V, and a high voltage power source is not required for exciting the magnet. Moreover, electrical power cannot be lost in the steady state of the resistive magnet, because of its inductance component.
(B3) Although Bi-system current lead can be used in the case of the low temperature end of 77 K, it cannot be used in the high magnetic field. The Y-system also cannot be used in the case of the low temperature end of 77 K. Accordingly, the operating temperature of a magnetic flux flow resistive coil is set to be within a range of approximately 4.2 to 30 K. The specifically preferred operating temperature is 20 K.
   The advantage of operating the magnetic flux flow resistive coil at the temperature of 20 K is that the Y-system high magnetic field high temperature superconductor current lead studied by the inventors can be practically used, thereby reducing thermal intrusion to one tenth as compared with that of copper current lead. Also, it is possible to reduce the thermal load to approximately 10 W to 20 K side, at the current of 21 kA.
(B4) The electric power due to the resistance component of the coil is approximately 1 kW. The refrigerating ability of conventional refrigerator is only approximately 100W at 4.2 K, though the refrigerating ability of approximately 1 kW can be obtained at 20 K. It is thus possible to realize, for the first time in the world, a resistive magnet that can be refrigerated by a refrigerator at the operating temperature of 20 K.
(B5) Specific heat of the magnetic flux flow resistive coil at the temperature of 20 K is 100 times or more as compared with the specific heat at 4.2 K. Thus, the magnetic flux flow resistive coil has a large margin in thermal stability, even under a thermal nuisance.
(B6) When a magnetic field is applied in a direction normal to the c-axis of the high temperature superconductor, the temperature under which the critical current density of the superconductor can be retained at a value of not less than 10⁴ A/cm² is below 20 K up to the magnetic field intensity of 30 T. In particular, Y-123 makes it possible to achieve a critical current density of not less than 10⁴ A/cm², up to 30 T at the temperature of 20 K. A current capacity of 7 kA can be achieved by a disc-shaped Bitter plate with an inner diameter of 80 mm, an outer diameter of 150 mm and a film thickness of 40 µm, when only one side of the plate is used. Thus, for example, a current supply of 21kA is possible when three pieces of Bitter plates are superimposed one above the other.
(B7) When a Y-123 film having a thickness of 40 µm is to be formed on the surface of the disk-shaped Bitter plate, evaporation is not very appropriate process. Instead, spraying method and epitaxial growing method are suitable processes for forming a thick film over a wide area. For improving the critical current density of the Y-123 film, the bond between the crystal grain boundaries of the film must be good as in a single crystal film. To attain such property in a Bitter plate, it is advantageous to use a rolled texture and the magnetic field orientation control.
   Namely, the "a-b" plane of the Y-123 film is aligned to the extent possible, by rolling the Bitter plate and thereby add a texture to the plate. Then, the c-axis of the plate is aligned with the direction normal to the surface of the plate by an orientating effect caused by a high magnetic field.
   According to the recent studies by the inventors, it has been verified that the c-axis is oriented very sharply during the deposition, due to the magnetic field in the Bi- and Y-system high temperature superconductors.
(B8) Although a perfectly resistance-free superconducting state of Y-123 superconductor could be used when its "a-b" plane is completely aligned in the Bitter plate, there is inevitably more or less deviation or inclination of the "a-b" plane in the circumferential direction of the plate. Nevertheless, it can be predicted that since the deviation of the "a-b" plane is not of a significant angle, a considerably large critical current could be obtained and the critical current characteristic themselves would show a broad transition. That is to say, the current would be supplied in the region in which the magnetic flux flow state is recognized.
(B9) For a Y-123 Bitter plate, a high-strength mechanical characteristic is required and it is important that such mechanical characteristic does not deteriorate during the film deposition and the stress relieving heat treatment in oxygen atmosphere. From such a viewpoint, Hastelloy has a sufficient heat resistance whereby the design value of the Bitter plate can be secured to a value of not less than 500 MPa. In order to perform the Y-123 film-deposition, it is advantageous to provide a buffer layer on the Hastelloy plate, which is in the form of a silver lining having a thickness of 0.2 mm, with the ratio of silver versus Y-123 being approximately 7: 1, and to give a texture treatment also to the silver lining by a cold working.
(B10) Although polyimide has been used for electrical insulation between the Bitter layers in the conventional Bitter magnet, the oxide of Hastelloy generated during the heat-treatment in oxygen atmosphere can be used as an effective insulator according to the invention.

Finally, the features and applications of the present invention may be summarized as follows:
(C1) A superconducting magnet according to a new concept utilizing a transport current up to the magnetic flux flow state of the superconductor, unlike the conventional superconducting magnet which utilizes the zero-resistance state of the superconductor.
(C2) A small electric power resistive magnet classified as intermediate level magnet between a conventional small electric power superconducting magnet and a conventional large electric power resistive magnet.
(C3) A low temperature, low resistive magnet using the magnetic flux flow resistive state, in which the transition of the superconductor is extremely broad and stable, having a small resistance up to approximately 1/1000 of the conventional low temperature, low resistive magnet using copper.
(C4) A magnetic flux flow resistive magnet generating a magnetic field with a large current.
(C5) A magnetic flux flow resistive magnet in which the inductance of the coil is small at a large current.
(C6) A magnetic flux flow resistive magnet using a low voltage DC power source at a large current.
(C7) A magnetic flux flow resistive magnet using high temperature superconductor Bitter plates which are laminated one above the other.
(C8) A magnetic flux flow resistive magnet which is operated at a temperature of 20 K.
(C9) A magnetic flux flow resistive magnet using Y-system high temperature superconductor current lead which is operated at a temperature of 20 K.
(C10) A magnetic flux flow resistive magnet using Y-system high temperature superconductor Bitter plate which is operated at a temperature of 20 K.
(C11) A magnetic flux flow resistive magnet which is operated at a temperature of 20 K and which can be refrigerated by a refrigerator.
(C12) A Bitter type magnetic flux flow resistive magnet using Hastelloy for reinforcement as the high-strength material.
(C13) A method for manufacturing a high temperature superconductor Bitter plate using the characteristic wherein the "a-b" plane of the superconductor is aligned along the texture at the film-depositing of the superconductor, by depositing a silver lining on a Hastelloy plate and adding the texture by working.
(C14) A method for manufacturing a high temperature superconductor Bitter plate using an orientating effect caused by a high magnetic field, wherein the orientating effect serves to align the c-axis of the superconductor with the direction normal to the surface of the plate.

## Claims

1. A magnetic flux flow resistive magnet comprising a Bi- or Y-system high temperature superconductor and adapted to be used under a magnetic flux flow resistive state.

2. The magnetic flux flow resistive magnet according to claim 1, further comprising a disk of a high-strength sheet material and wherein said high temperature superconductor is a film that is formed on a surface of said disk.

3. The magnetic flux flow resistive magnet according to claim 2, wherein said film has a thickness within a range of 10 µm to 60 µm.

4. The magnetic flux flow resistive magnet according to claim 1, wherein said high temperature superconductor is in the form of a wire.

5. The magnetic flux flow resistive magnet according to claim 1, wherein said high temperature superconductor is in the form of a tape.

6. The magnetic flux flow resistive magnet according to claim 1, wherein the magnet has a working temperature within a range of 4.2 K to 30 K.

7. The magnetic flux flow resistive magnet according to claim 6, wherein the working temperature of the magnet is approximately 20 K.

8. The magnetic flux flow resistive magnet according to claim 1, wherein the high temperature superconductor comprises YBa₂Cu₃O (Y-123).

9. The magnetic flux flow resistive magnet according to claim 1, wherein the high temperature superconductor comprises Bi₂Sr₂CaCu₂O₈ (Bi-2212).

10. The magnetic flux flow resistive magnet according to claim 1, wherein the high temperature superconductor comprises Bi₂Sr₂CaCu₃O₁₀ (Bi-2223).

11. A method for manufacturing a magnetic flux flow resistive magnet comprising a Bi- or Y-system high temperature superconductor in the form of a film on a surface of a disk that is comprised of a high-strength sheet material, said magnet forming a Bitter plate that is used under a magnetic flux flow resistive state, wherein the method comprises the steps of:
subjecting the disk of the high-strength sheet material to rolling to cause a texture, so that the high temperature superconductor has an a-b plane that is aligned along the texture during formation of the high temperature superconductor film on the disk; and
applying a high magnetic field to the high temperature superconductor film to cause an orientating effect so that the high temperature superconductor film has a c-axis that is aligned in a direction normal to the surface of the disk.

12. The method according to claim 11, wherein a buffer layer is formed on the surface of the disk, prior to formation of the high temperature superconductor film thereon.

13. The method according to claim 12, wherein the buffer layer on the surface of the disk is in the form of a silver lining layer.
